# EUROPEAN PATENT SPECIFICATION

(11) **EP 1 848 258 B1**
(45) Date of publication and mention of the grant of the patent: **12.11.2008**
(21) Application number: 06255988.5
(22) Date of filing: 22.11.2006
(51) Int. Cl.: H05K 7/14

(54) **Computer device with a modular transmission interface, the modular transmission interface, and an adaptor board**
Computervorrichtung mit einer modularen Übertragungsschnittstelle, die modulare Übertragungsschnittstelle und eine Anschlussbaugruppe
Dispositif informatique comprenant une interface de transmission modulaire, interface de transmission modulaire et carte d'adaptateur

(30) Priority: 18.04.2006 CN 200620112562 U
(43) Date of publication of application: 24.10.2007
(73) Proprietor: AOPEN INC., Hsichih Taipei Hsien (TW)
(72) Inventor: Chen, Yuang-Chih, Hsichih, Taipei Hsien (TW)
(74) Representative: Pratt, David Martin

(56) References cited:
- JP-A- 8 076 890
- US-A1- 2003 188 203
- US-A1- 2006 018 086

## Description

The invention relates to a computer device, more particularly to a computer device having a modular transmission interface that facilitates assembly of a hard disk and an optical disk drive, and to a modular transmission interface and an adaptor board.

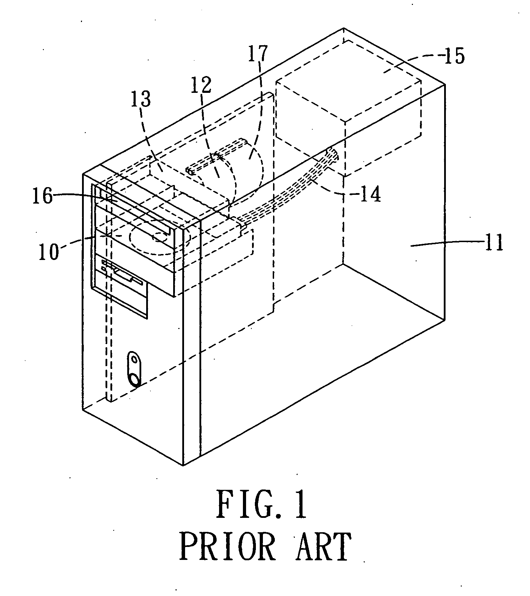

Referring to Figure 1, when installing a hard disk 10 in a conventional computer device, in addition to securing the hard disk 10 on a housing 11, the hard disk 10 is connected to a motherboard 13 through a flexible ribbon cable 12, and is connected to a power supply 15 through a transmission line 14. Similarly, a flexible ribbon cable 17 is also used to connect an optical disk drive 16 to the motherboard 13.

In recent years, there is a trend toward miniaturization of electronic equipment. To meet such trend, the size of computer devices, such as the computer device of a bare computer system, has become smaller and smaller. However, with a reduction in the size of the computer device, the assembly positions of components in the computer device become closer and closer. As a result, clearances among the components become smaller than ever. On the other hand, since the connection of the flexible ribbon cables 12, 17 requires a sufficient space, the installation of the hard disk 10 and the optical disk drive 16 is getting more and more difficult, thereby rendering assembly and maintenance of the hard disk 10 and the optical disk drive 16 inconvenient and difficult.

Use of an adaptor board that is connected detachably to a motherboard is contemplated for mounting of a hard disk connector and an optical disk drive connector thereon such that a hard disk and an optical disk drive can be directly connected to a mating connector of the adaptor board without using flexible ribbon cables so as to achieve amodular transmission interface to thereby facilitate assembly and maintenance.

Therefore, the object of the present invention is to provide a computer device having a modular transmission interface, the modular transmission interface, and an adaptor board that can facilitate assembly.

Accordingly, the modular transmission interface of the present invention is provided on a motherboard. The motherboard has a South Bridge and a power transmission port. The transmission interface includes a slot connector and an adaptor board. The slot connector is provided on the motherboard, and is connected to the South Bridge and the power transmission port. The adaptor board has a board body, a mating connector provided on the board body and connected detachably to the slot connector, a hard disk connector provided on the board body and connected to the mating connector, and an optical disk connector provided on the board body and connected to the mating connector.

With the arrangement of the adaptor board and the slot connector, the hard disk and the optical disk drive can be directly connected to the hard disk connector and the optical disk drive connector, respectively, so as to permit signal and power transmission with the motherboard, thereby facilitating assembly and maintenance.

Other features and advantages of the present invention will become apparent in the following detailed description of the preferred embodiment with reference to the accompanying drawings, of which:
Figure 1 is a schematic view to illustrate assembly of a hard disk and an optical disk drive in a conventional computer device;
Figure 2 is an exploded view of a preferred embodiment of a computer device having a modular transmission interface according to the present invention;
Figure 3 is a block diagram to illustrate electrical connection between a slot connector and a motherboard of the preferred embodiment;
Figure 4 is a layout diagram of an example of the slot connector of the preferred embodiment;
Figure 5 is a layout diagram of an example of a mating connector of the preferred embodiment;
Figure 6 is a layout diagram of an example of a hard disk connector of the preferred embodiment;
Figure 7 is a layout diagramof an example of an optical disk drive connector of the preferred embodiment;
Figure 8 is a fragmentary schematic view to illustrate connection of an adaptor board to the slot connector of the preferred embodiment;
Figure 9 is a fragmentary view to illustrate assembly of the preferred embodiment; and
Figure 10 is a schematic view to illustrate an alternative form of the adaptor board of the preferred embodiment.

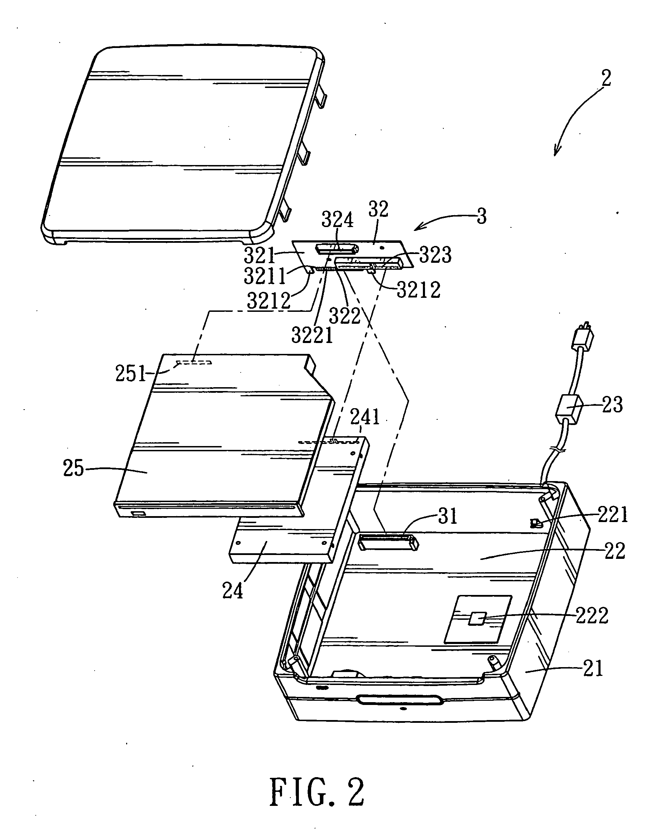

Referring to Figure 2, the preferred embodiment of a computer device 2 having a modular transmission interface according to the present invention is shown to include a housing 21, a motherboard 22 disposed in the housing 21, a power supply 23, a hard disk 24, an optical disk drive 25, and a modular transmission interface 3. To reduce the size of the computer device 2 effectively, the power supply 23 in this embodiment is an external transformer that connects to a power transmission port 221 of the motherboard 22 so that external power can be delivered to each of the computer components through the motherboard 22. The motherboard 22 has a South Bridge 222 responsible for peripheral components, such as the hard disk 24 and the optical disk drive 25. Certainly, the computer device 2 may include other computer components, such as a North Bridge (not shown), a memory (not shown), and a microprocessor (not shown). As these components are well known in the art and are not the crux of this invention, they will not be discussed in detail herein.

The modular transmission interface 3 in this embodiment has a slot connector 31 provided on the motherboard 22, and an adaptor board 32.

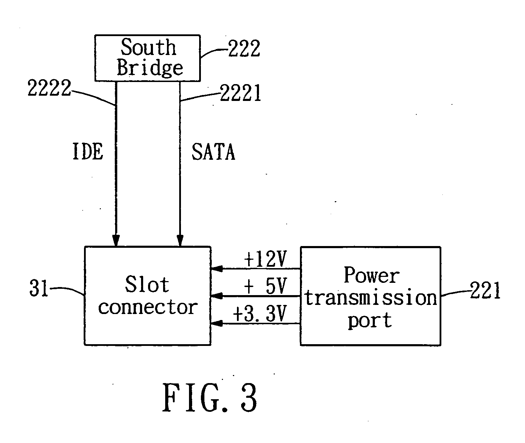

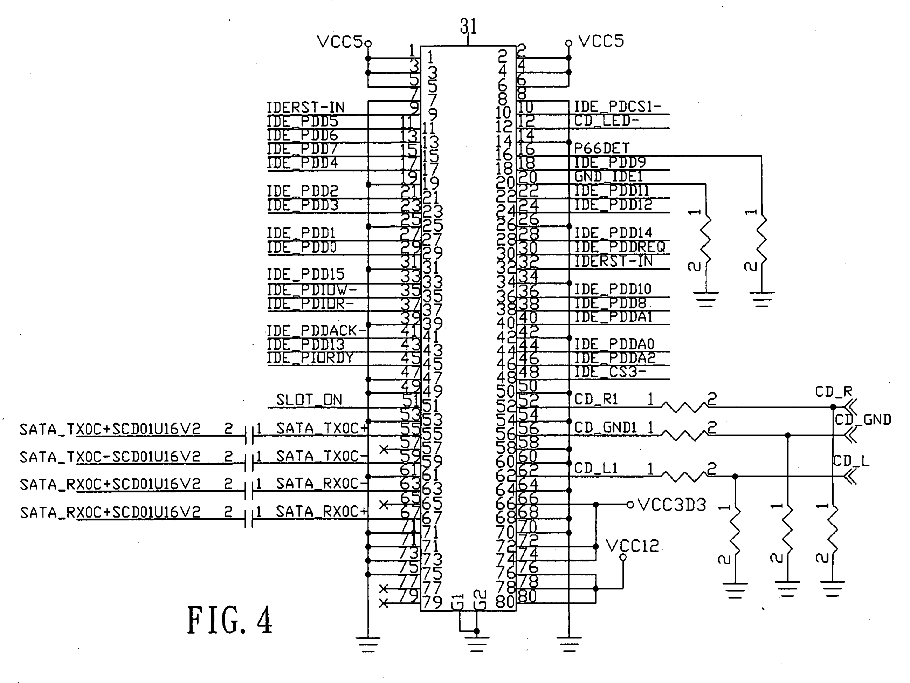

Referring to both Figures 2 and 3, to effectively reduce the space required for transmission wiring of the hard disk 24 and the optical disk drive 25, the slot connector 31 in this embodiment is connected to the South Bridge 222 and the power transmission port 221. In particular, the slot connector 31 is connected to two transmission lines 2221, 2222 of the South Bridge 222 which are used for the hard disk 24 and the optical disk drive 25, respectively, such that the South Bridge 222 can control the hard disk 24 and the optical disk drive 25 through a single slot connector 31. Besides, the power supplied via the power transmission port 221 can be delivered to the hard disk 24 and the optical disk drive 25 through the slot connector 31 so as to supply the hard disk 24 and the optical disk drive 25 with the electric power necessary for operation. The transmission interfaces of the South Bridge 222 which are associated with the hard disk 24 and the optical disk drive 25 include a Serial Advanced Technology Attachment (SATA) interface and an Integrated Drive Electronics (IDE) interface, the latter being also known as a Parallel Advanced Technology Attachment (PATA) interface. At present, the transmission interface for a hard disk includes SATA and IDE, whereas the transmission interface for an optical disk drive is largely IDE. Referring to Figure 4, the slot connector 31 in this embodiment integrates SATA and IDE. Certainly, it is apparent to those skilled in the art that the slot connector 31 may be one integrating two IDE interfaces, and is not limited to the disclosure of the preferred embodiment.

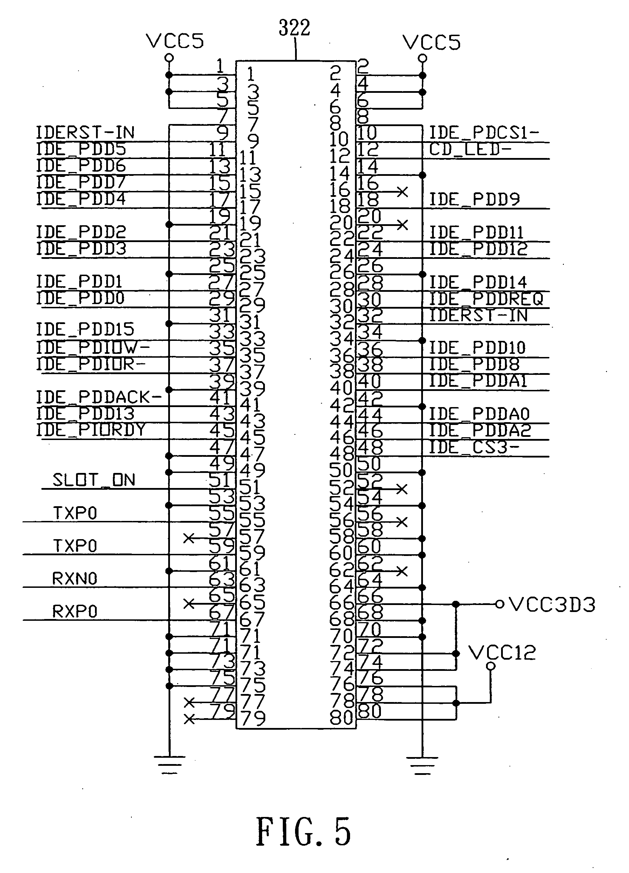

Referring to Figure 2, the adaptor board 32 includes a board body 321, a mating connector 322 provided on the board body 321 and connected detachably to the slot connector 31, a hard disk connector 323 provided on the board body 321 and connected to the mating connector 322, and an optical disk drive connector 324 provided on the board body 321 and connected to the mating connector 322. The board body 321 in this embodiment is a substantially rectangular printed circuit board (PCB). To reduce the space required for assembling the mating connector 322 and the slot connector 31, a tab 3211 in the form of a strip extends downwardly from a bottom side of the board body 321 at a position corresponding to the slot connector 31. The length of the tab 3211 is dimensioned to match that of the slot connector 31 so as to be insertable into the slot connector 31. The mating connector 322 has a plurality of conductive pieces 3221 that are arranged in a row on a surface of the tab 3211. The mating connector 322 in this embodiment is the so-called golden finger connector. As shown in Figure 5, the arrangement of the conductive pieces 3221 of the mating connector 322 corresponds to the slot connector 31.

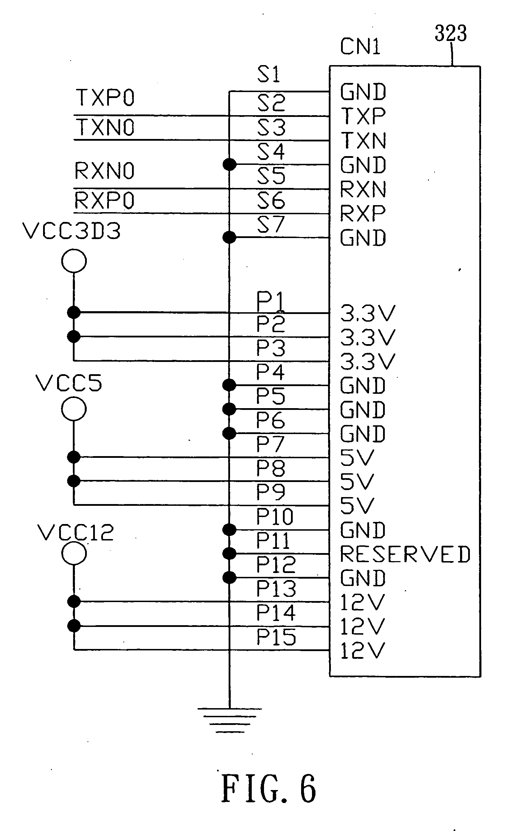

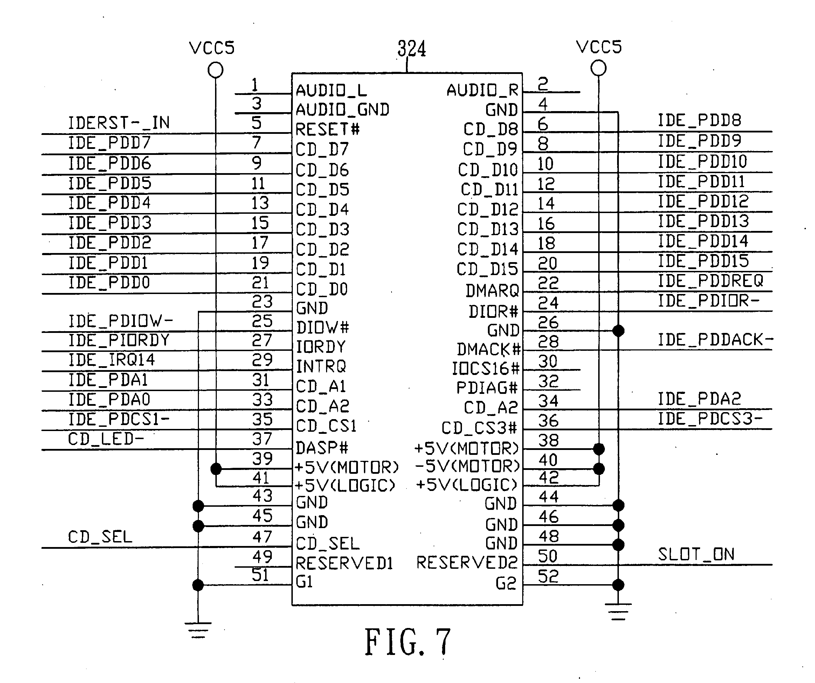

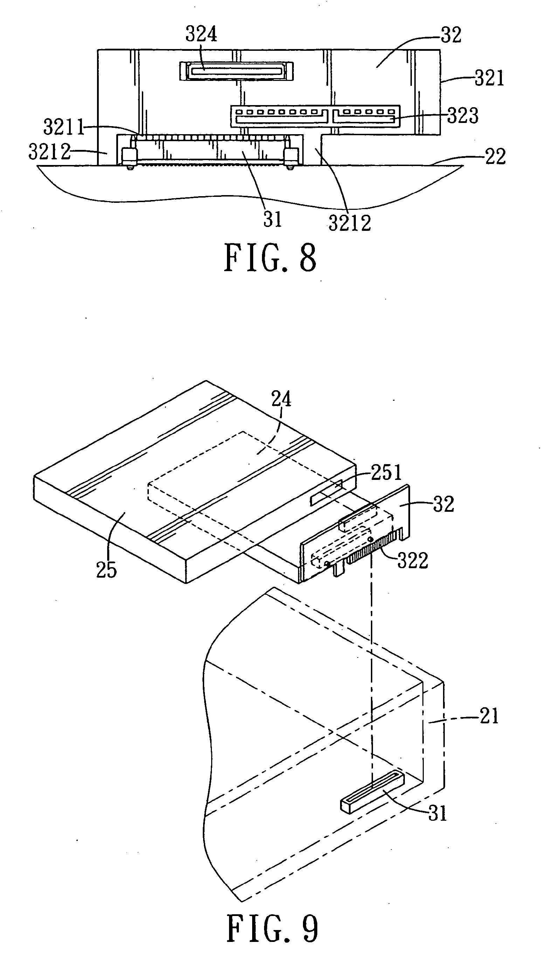

In this embodiment, as shown in Figure 6, the hard disk connector 323 is a SATA connector. As shown in Figure 7, the optical disk drive connector 324 is an IDE connector. Furthermore, referring to Figure 8, two support pieces 3212 extend downwardly from the bottom side of the board body 321, and are disposed respectively on two sides of the tab 3211. Each of the support pieces 3212 is spaced apart from the tab 3211 by a predetermined distance that matches the thickness of a housing of the slot connector 31 such that when the mating connector 322 of the adaptor board 32 mates with the slot connector 31, the two support pieces 3212 can assist in supporting and positioning of the adaptor board 32.

Thus, referring to Figure 2, during assembly, it is merely necessary to have respective connectors 241, 251 of the hard disk 24 and the optical disk drive 25 mated with the hard disk connector 323 and the optical disk drive connector 324 on the adaptor board 32, respectively. Then, as shown in Figure 9, the mating connector 322 of the adaptor board 32 is mated to the slot connector 31 to thereby electrically connect the hard disk 24 and the optical disk drive 25 to the motherboard 22, thereby facilitating easy assembly and maintenance.

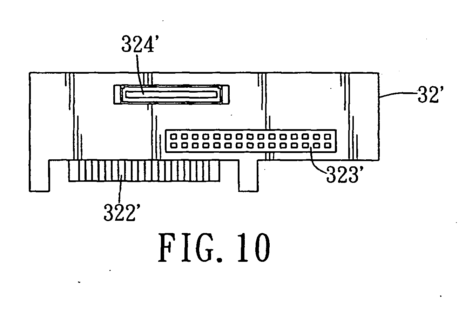

Referring to Figure 10 in combination with Figure 3, it is noted that since some hard disks are of the IDE specification, the hard disk connector 323' of the adaptor board 32' can be an IDE (i.e., PATA) connector. The hard disk connector 323' is connected to IDE wiring of the mating connector 322' so that the hard disk connector 323' and the optical disk drive connector 324' share the same transmission line 2222 to the South Bridge 222. Thus, two types of adaptor boards 32, 32' having a SATA hard disk connector 323 and an IDE hard disk connector 323' , respectively, can be pre-fabricated to allow manufacturers to select either the adaptor board 32 or 32' to match the specification of the hard disk 24, thereby facilitating assembly.

Given the foregoing, the computer device 2 having a modular transmission interface of the present invention allows the hard disk 24 and the optical disk drive 25 to be electrically connected to the motherboard 22 via the adaptor board 32, 32' so as to achieve easy assembly and maintenance. Furthermore, the above-illustrated preferred embodiment employs a single slot connector 31 that is responsible for signal transmission between the South Bridge 222 and the hard disk 24 and the optical disk drive 25, and that is also responsible for delivering the electric power required by the hard disk 24 and the optical disk drive 25. As a result, signal and power transmission between the motherboard 22 and each of the hard disk 24 and the optical disk drive 25 can be realized by a single insertion operation of the adaptor board 32, 32', thereby simplifying circuit connections and assembly operation. Besides, the space required for connecting transmission interfaces of the hard disk 24 and the optical disk drive 25 within the computer device 2 and on the motherboard 22 can be reduced effectively to conform to the trend toward miniaturization of the computer device 2.

## Claims

1. A modular transmission interface (3) which is adapted to be provided on a motherboard (22), the motherboard (22) having a South Bridge (222) and a power transmission port (221), said modular transmission interface (3) being **characterized by**:
a slot connector (31) adapted to be provided on the motherboard (22) and adapted to be connected to the South Bridge (222) and the power transmission port (221); and
an adaptor board (32, 32') having a board body (321), a mating connector (322, 322') provided on said board body (321) and connected detachably to said slot connector (31), a hard disk connector (323, 323') provided on said board body (321) and connected to said mating connector (322, 322'), and an optical disk drive connector (324, 324') provided on said board body (321) and connected to said mating connector (322, 322').

2. The modular transmission interface (3) according to Claim 1, **characterized in that** said board body (321) is a rectangular circuit board, and saidmating connector (322, 322') is provided on a bottom side of said board body (321).

3. The modular transmission interface (3) according to Claim 2, **characterized in that** said board body (321) has a tab (3211) extending downwardly from said bottom side and that matches said slot connector (31), said mating connector (322, 322') including a plurality of conductive pieces (3221) arranged in a row on a surface of said tab (3211).

4. The modular transmission interface (3) according to Claim 3, **characterized in that** said board body (321) further has support pieces (3212) that extend downwardly from said bottom side, and that are disposed respectively on two sides of said tab (3211) to match said slot connector (31).

5. The modular transmission interface (3) according to Claim 1, **characterized in that** said hard disk connector (323) is a Serial Advanced Technology Attachment connector.

6. The modular transmission interface (3) according to Claim 1, **characterized in that** said hard disk connector (323') is an Integrated Drive Electronics connector.

7. The modular transmission interface (3) according to Claim 1, **characterized in that** said optical disk drive connector (324, 324') is an Integrated Drive Electronics connector.

8. A computer device (2) **characterized by**:
a motherboard (22) having a South Bridge (222) and a power transmission port (221);
a hard disk (24);
an optical disk drive (25);-and
a modular transmission interface (3) having:
a slot connector (31) provided on said motherboard (22) and connected to said South Bridge (222) and said power transmission port (221); and
an adaptor board (32, 32') having a board body (321), a mating connector (322, 322') provided on said board body (321) and connected detachably to said slot connector (31), a hard disk connector (323, 323') provided on said board body (321) and connected to said mating connector (322, 322'), and an optical disk drive connector (324, 324') provided on said board body (321) and connected to said mating connector (322, 322'), said hard disk (24) being connected detachably to said hard disk connector (323, 323'), said optical disk drive (25) being connected detachably to said optical disk drive connector (324, 324').

9. The computer device (2) according to Claim 8, **characterized in that** said board body (321) is a rectangular circuit board, and said mating connector (322, 322') is provided on a bottom side of said board body (321).

10. The computer device (2) according to Claim 9, **characterized in that** said board body (321) as a tab (3211) that extends downwardly from said bottom side and that matches said slot connector (31), said mating connector (322, 322') including a plurality of conductive pieces (3221) arranged in a row on a surface of said tab (3211).

11. The computer device (2) according to Claim 10, **characterized in that** said board body (321) further has support pieces (3212) that extend downwardly from said bottom side, and that are disposed respectively on two sides of said tab (3211) to match said slot connector (31).

12. The computer device (2) according to Claim 8, **characterized in that** said hard disk connector (323) is a Serial Advanced Technology Attachment connector.

13. The computer device (2) according to Claim 8, **characterized in that** said hard disk connector (323') is an Integrated Drive Electronics connector.

14. The computer device (2) according to Claim 8, **characterized in that** said optical disk drive connector (324, 324') is an Integrated Drive Electronics connector.

15. An adaptor board (32, 32') adapted to be connected detachably to a slot connector (31) on a motherboard (22), the slot connector (31) being connected to a South Bridge (222) and a power transmission port (221) on the motherboard (22), said adaptor board (32, 32') being **characterized by**:
a board body (321);
a mating connector (322, 322') provided on said board body (321) and adapted to be connected detachably to the slot connector (31);
a hard disk connector (323, 323') provided on said board body (321) and connected to said mating connector (322, 322'); and
an optical disk drive connector (324, 324') provided on said board body (321) and connected to said mating connector (322, 322').

16. The adaptor board (32, 32') according to Claim 15, **characterized in that** said board body (321) is a rectangular circuit board, and said mating connector (322, 322') is provided on a bottom side of said board body (321).

17. The adaptor board (32, 32') according to Claim 16, **characterized in that** said board body (321) has a tab (3211) that extends downwardly from said bottom side and that is adapted to match the slot connector (31), said mating connector (322, 322') having a plurality of conductive pieces (3221) arranged in a row on a surface of said tab (3211).

18. The adaptor board (32, 32') according to Claim 17, **characterized in that** said board body (321) further has support pieces (3212) that extend downwardly from said bottom side, and that are disposed respectively on two sides of said tab (3211) so as to be adapted to match the slot connector (31).

19. The adaptor board (32, 32') according to Claim 15, **characterized in that** said hard disk connector (323) is a Serial Advanced Technology Attachment connector.

20. The adaptor board (32, 32') according to Claim 15, **characterized in that** said hard disk connector (323') is an Integrated Drive Electronics connector.

21. The adaptor board (32, 32') according to Claim 15, **characterized in that** said optical disk drive connector (324, 324') is an Integrated Drive Electronics connector.

## Patentansprüche

1. Schnittstellenmodul (3), das auf einer Rechner-Hauptplatine (22) mit einem South-Bridge-Baustein (222) und einem Stromversorgungsanschluss (221) anordenbar ist und aufweist:
einen Schlitz-Verbinder (31), der auf der Hauptplatine anordenbar und mit dem South-Bridge-Baustein (222) und dem Stromzufuhranschluss (221) verbindbar ist; und
eine Adapter-Flachbaugruppe (32, 32') mit einer Leiterplatte (321), einem Gegenverbinder (322, 322') auf der Leiterplatte (321), der mit dem Schlitz-Verbinder (31) lösbar verbindbar ist, einem Festplattenverbinder (323, 323') auf der Leiterplatte (321), der mit dem Gegenverbinder (322, 322') verbunden ist, und einem Verbinder (324, 324') für ein Laufwerk für eine optische Speicherplatte, der auf der Leiterplatte (321) angeordnet und mit dem Gegenverbinder (322, 322') verbunden ist.

2. Schnittstellenmodul (3) nach Anspruch 1, **dadurch gekennzeichnet, dass** die Leiterplatte (321) rechteckig und der Gegenverbinder (322, 322') auf einer Unterseite der Leiterplatte (321) angeordnet ist.

3. Schnittstellenmodul (3) nach Anspruch 2, **dadurch gekennzeichnet, dass** die Leiterplatte (321) eine Kantenleiste (3211) aufweist, die von der Unterseite abwärts vorsteht und zum Schlitz-Verbinder (31) komplementär ausgeführt ist, wobei der Gegenverbinder (322, 322') eine Vielzahl von leitfähigen Bereichen (3221) aufweist, die auf einer Oberfläche der Kantenleiste (3211) zu einer Reihe angeordnet sind.

4. Schnittstellenmodul (3) nach Anspruch 3, **dadurch gekennzeichnet, dass** die Leiterplatte (321) weiterhin Stützlaschen (3212) aufweist, die von ihrer Unterseite abwärts und beiderseits der Kantenleiste (3211) zum Schlitz-Verbinder (31) komplementär vorstehen.

5. Schnittstellenmodul (3) nach Anspruch 1, **dadurch gekennzeichnet, dass** der Festplattenverbinder (323) ein SATA-Verbinder ist.

6. Schnittstellenmodul (3) nach Anspruch 1, **dadurch gekennzeichnet, dass** der Festplattenverbinder (323') ein IDE-Verbinder ist.

7. Schnittstellenmodul (3) nach Anspruch 1, **dadurch gekennzeichnet, dass** der Laufwerkverbinder (324, 324') für optische Speicherplatten ein IDE-Verbinder ist.

8. Computer (2), **gekennzeichnet durch**:
eine Hauptplatine (22) mit einem South-Bridge-Baustein (222) und einem Stromversorgungsanschluss (221);
eine Festplatte (24);
ein Laufwerk (25) für optische Speicherplatten; und
ein Schnittstellenmodul (3) mit:
einem Schlitz-Verbinder (31) auf der Hauptplatine (22), der mit dem South-Bridge-Baustein (222) und dem Stromversorgungsanschluss (221) verbunden ist, und
einer Adapter-Flachbaugruppe (32, 32') mit einer Leiterplatte (321), einem Gegenverbinder (322, 322') auf der Leiterplatte (321), der mit dem Schlitz-Verbinder (31) lösbar verbunden ist, einem Festplattenverbinder (323, 323') auf der Leiterplatte (321), der mit dem Gegenverbinder (322, 322') verbunden ist, sowie einem Verbinder (324, 324') für ein Laufwerk für optische Speicherplatten, der auf der Leiterplatte (321) angeordnet und mit dem Gegenverbinder (322, 322') verbunden ist, wobei die Festplatte (24) lösbar mit dem Festplattenverbinder (323, 323') und das Laufwerk (25) für optische Speicherplatten lösbar mit dem Laufwerkverbinder (324, 324') verbunden sind.

9. Computer (2) nach Anspruch 8, **dadurch gekennzeichnet, dass** die Leiterplatte (321) rechteckig und der Gegenverbinder (322, 322') auf einer Unterseite der Leiterplatte (321) angeordnet ist.

10. Computer (2) nach Anspruch 9, **dadurch gekennzeichnet, dass** die Leiterplatte (321) eine Kantenleiste (3211) aufweist, die von der Unterseite abwärts vorsteht und zum Schlitz-Verbinder (31) komplementär ausgeführt ist, wobei der Gegenverbinder (322, 322') eine Vielzahl von leitfähigen Bereichen (3221) aufweist, die auf einer Oberfläche der Kantenleiste (3211) zu einer Reihe angeordnet sind.

11. Computer (2) nach Anspruch 10, **dadurch gekennzeichnet, dass** die Leiterplatte (321) weiterhin Stützlaschen (3212) aufweist, die von der Unterseite abwärts vorstehen und die auf zwei Seiten der Kantenleiste (3211) zum Schlitz-Verbinder (31) passend angeordnet sind.

12. Computer (2) nach Anspruch 8, **dadurch gekennzeichnet, dass** der Festplattenverbinder (323) ein SATA-Verbinder ist.

13. Computer (2) nach Anspruch 8, **dadurch gekennzeichnet, dass** der Festplattenverbinder (323') ein IDE-Verbinder ist.

14. Computer (2) nach Anspruch 8, **dadurch gekennzeichnet, dass** der Laufwerkverbinder (324, 324') ein IDE-Verbinder ist.

15. Adapter-Flachbaugruppe (32, 32'), die mit einem Schlitz-Verbinder (31) auf einer Hauptplatine (22) lösbar verbindbar ist, wobei der Schlitz-Verbinder (31) mit einem South-Bridge-Baustein (222) und einem Stromversorgungsanschluss (221) auf der Hauptplatine (22) verbunden ist und die Adapter-Flachbaugruppe (32, 32') **gekennzeichnet ist durch**:
eine Leiterplatte (321);
einen Gegenverbinder (322, 322') auf der Leiterplatte (321), der mit derm Schlitz-Verbinder (31) lösbar verbindbar ist;
einen Festplattenverbinder (323, 323') auf der Leiterplatte (321), der mit dem Gegenverbinder (322, 322') verbunden ist; und
einen Verbinder (324, 324') für ein Laufwerk für optische Speicherplatten, der auf der Leiterplatte (321) angeordnet und mit dem Gegenverbinder (322, 322') verbunden ist.

16. Adapter-Flachbaugruppe (32, 32') nach Anspruch 15, **dadurch gekennzeichnet, dass** die Leiterplatte (321) rechteckig und der Gegenverbinder (322, 322') auf einer Unterseite der Leiterplatte (321) angeordnet ist.

17. Adapter-Flachbaugruppe (32, 32') nach Anspruch 16, **dadurch gekennzeichnet, dass** die Leiterplatte (321) eine Kantenleiste (3211) aufweist, die von der Unterseite abwärts vorsteht und zum Schlitz-Verbinder (31) komplementär ausgeführt ist, wobei der Gegenverbinder (322, 322') eine Vielzahl leitfähiger Bereiche (3221) aufweist, die auf einer Oberfläche der Kantenleiste (3211) zu einer Reihe angeordnet sind.

18. Adapter-Flachbaugruppe (32, 32') nach Anspruch 17, **dadurch gekennzeichnet, dass** die Leiterplatte (321) weiterhin Stützlaschen (3212) aufweist, die von der Unterseite abwärts vorstehen und beiderseits der Kantenleiste (3211) zum Schlitz-Verbinder (31) komplementär angeordnet sind.

19. Adapter-Flachbaugruppe (32, 32') nach Anspruch 15, **dadurch gekennzeichnet, dass** der Festplattenverbinder (323) ein SATA-Verbinder ist.

20. Adapter-Flachbaugruppe (32, 32') nach Anspruch 15, **dadurch gekennzeichnet, dass** der Festplattenverbinder (323') ein IDE-Verbinder ist.

21. Adapter-Flachbaugruppe (32, 32') nach Anspruch 15, **dadurch gekennzeichnet, dass** der Laufwerkverbinder (324, 324') ein IDE-Verbinder ist.

## Revendications

1. Interface de transmission modulaire (3) adaptée pour être disposée sur une carte mère (22), la carte mère (22) comportant une puce South Bridge (222) et un port de transmission d'énergie (221), laquelle interface de transmission modulaire (3) est **caractérisée par** :
un connecteur à fente (31) adapté pour être disposé sur la carte mère (22) et pour être connecté à la puce South Bridge (222) et au port de transmission d'énergie (221); et
une carte adaptateur (32, 32') comportant un corps de carte (321), un connecteur complémentaire (322, 322') disposé sur ledit corps de carte (321) et connecté de manière amovible audit connecteur à fente (31), un connecteur de disque dur (323, 323') disposé sur ledit corps de carte (321) et connecté audit connecteur complémentaire (322, 322'), et un connecteur d'unité de disque optique (324, 324') disposé sur ledit corps de carte (321) et connecté audit connecteur complémentaire (322, 322').

2. Interface de transmission modulaire (3) selon la revendication 1, **caractérisée en ce que** ledit corps de carte (321) est une carte à circuit rectangulaire, et **en ce que** ledit connecteur complémentaire (322, 322') est disposé sur un côté inférieur dudit corps de carte (321).

3. Interface de transmission modulaire (3) selon la revendication 2, **caractérisée en ce que** ledit corps de carte (321) comporte une barrette (3211) qui s'étend vers le bas depuis ledit côté inférieur et qui coïncide avec ledit connecteur à fente (31), ledit connecteur complémentaire (322, 322') comprenant de multiples éléments conducteurs (3221) disposés en une rangée sur une surface de ladite barrette (3211).

4. Interface de transmission modulaire (3) selon la revendication 3, **caractérisée en ce que** ledit corps de carte (321) comporte également des éléments de support (3212) qui s'étendent vers le bas depuis ledit côté inférieur et qui sont respectivement disposés des deux côtés de ladite barrette (3211) pour coïncider avec ledit connecteur à fente (31).

5. Interface de transmission modulaire (3) selon la revendication 1, **caractérisée en ce que** ledit connecteur de disque dur (323) est un connecteur répondant à la norme Serial Advanced Technology Attachment.

6. Interface de transmission modulaire (3) selon la revendication 1, **caractérisée en ce que** ledit connecteur de disque dur (323') est un connecteur répondant à la norme Integrated Drive Electronics.

7. Interface de transmission modulaire (3) selon la revendication 1, **caractérisée en ce que** ledit connecteur d'unité de disque optique (324, 324') est un connecteur répondant à la norme Integrated Drive Electronics.

8. Dispositif informatique (2) **caractérisé par** :
une carte mère (22) comportant une puce South Bridge (222) et un port de transmission d'énergie (221);
un disque dur (24) ;
une unité de disque optique (25) ; et
une interface de transmission modulaire (3) comportant :
un connecteur à fente (31) disposé sur ladite carte mère (22) et connecté à ladite puce South Bridge (222) et audit port de transmission d'énergie (221); et
une carte adaptateur (32, 32') comportant un corps de carte (321), un connecteur complémentaire (322, 322') disposé sur ledit corps de carte (321) et connecté de manière amovible audit connecteur à fente (31), un connecteur de disque dur (323, 323') disposé sur ledit corps de carte (321) et connecté audit connecteur complémentaire (322, 322'), et un connecteur d'unité de disque optique (324, 324') disposé sur ledit corps de carte (321) et connecté audit connecteur complémentaire (322, 322'), ledit disque dur (24) étant connecté de manière amovible audit connecteur de disque dur (323, 323') et ladite unité de disque optique (25) étant connectée de manière amovible audit connecteur d'unité de disque optique (324, 324').

9. Dispositif informatique (2) selon la revendication 8, **caractérisé en ce que** ledit corps de carte (321) est une carte à circuit rectangulaire, et **en ce que** ledit connecteur complémentaire (322, 322') est disposé sur un côté inférieur dudit corps de carte (321).

10. Dispositif informatique (2) selon la revendication 9, **caractérisé en ce que** ledit corps de carte (321) comporte une barrette (3211) qui s'étend vers le bas depuis ledit côté inférieur et qui coïncide avec ledit connecteur à fente (31), ledit connecteur complémentaire (322, 322') comprenant de multiples éléments conducteurs (3221) disposés en une rangée sur une surface de ladite barrette (3211).

11. Dispositif informatique (2) selon la revendication 10, **caractérisé en ce que** ledit corps de carte (321) comporte également des éléments de support (3212) qui s'étendent vers le bas depuis ledit côté inférieur et qui sont respectivement disposés des deux côtés de ladite barrette (3211) pour coïncider avec ledit connecteur à fente (31).

12. Dispositif informatique (2) selon la revendication 8, **caractérisé en ce que** ledit connecteur de disque dur (323) est un connecteur répondant à la norme Serial Advanced Technology Attachment.

13. Dispositif informatique (2) selon la revendication 8, **caractérisé en ce que** ledit connecteur de disque dur (323') est un connecteur répondant à la norme Integrated Drive Electronics.

14. Dispositif informatique (2) selon la revendication 8, **caractérisé en ce que** ledit connecteur d'unité de disque optique (324, 324') est un connecteur répondant à la norme Integrated Drive Electronics.

15. Carte adaptateur (32, 32') adaptée pour être connectée de manière amovible à un connecteur à fente (31) disposé sur une carte mère (22), le connecteur à fente (31) étant connecté à une puce South Bridge (222) et à un port de transmission d'énergie (221) disposé sur la carte mère (22), laquelle carte adaptateur (32, 32') est **caractérisée par** :
un corps de carte (321) ;
un connecteur complémentaire (322, 322') disposé sur ledit corps de carte (321) et adapté pour être connecté de manière amovible au connecteur à fente (31) ;
un connecteur de disque dur (323, 323') disposé sur ledit corps de carte et connecté audit connecteur complémentaire (322, 322') ; et
un connecteur d'unité de disque optique (324, 324') disposé sur ledit corps de carte (321) et connecté audit connecteur complémentaire (322, 322').

16. Carte adaptateur (32, 32') selon la revendication 15, **caractérisée en ce que** ledit corps de carte (321) est une carte à circuit rectangulaire, et **en ce que** ledit connecteur complémentaire (322, 322') est disposé sur un côté inférieur dudit corps de carte (321).

17. Carte adaptateur (32, 32') selon la revendication 16, **caractérisée en ce que** ledit corps de carte (321) comporte une barrette (3211) qui s'étend vers le bas depuis ledit côté inférieur et qui est adaptée pour coïncider avec le connecteur à fente (31), ledit connecteur complémentaire (322, 322') comprenant de multiples éléments conducteurs (3221) disposés en une rangée sur une surface de ladite barrette (3211).

18. Carte adaptateur (32, 32') selon la revendication 17, **caractérisée en ce que** ledit corps de carte (321) comporte également des éléments de support (3212) qui s'étendent vers le bas depuis ledit côté inférieur et qui sont respectivement disposés des deux côtés de ladite barrette (3211) afin d'être adaptés pour coïncider avec le connecteur à fente (31).

19. Carte adaptateur (32, 32') selon la revendication 15, **caractérisée en ce que** ledit connecteur de disque dur (323) est un connecteur répondant à la norme Serial Advanced Technology Attachment.

20. Carte adaptateur (32, 32') selon la revendication 15, **caractérisée en ce que** ledit connecteur de disque dur (323') est un connecteur répondant à la norme Integrated Drive Electronics.

21. Carte adaptateur (32, 32') selon la revendication 15, **caractérisée en ce que** ledit connecteur d'unité de disque optique (324, 324') est un connecteur répondant à la norme Integrated Drive Electronics.
